(19) Europäisches Patentamt
European Patent Office
Office européen des brevets

(11) **EP 3 702 223 B1**

(12) **EUROPEAN PATENT SPECIFICATION**

(45) Date of publication and mention
of the grant of the patent:
**29.10.2025 Bulletin 2025/44**

(51) International Patent Classification (IPC):
**B60R 21/0134** (2006.01)

(52) Cooperative Patent Classification (CPC):
**B60R 21/0134**

(21) Application number: **20157078.5**

(22) Date of filing: **13.02.2020**

(54) **FORCE LIMITER CONTROL SYSTEM**

KRAFTBEGRENZERSTEUERUNGSSYSTEM

SYSTÈME DE COMMANDE DE LIMITEUR DE FORCE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **28.02.2019 JP 2019036499**

(43) Date of publication of application:
**02.09.2020 Bulletin 2020/36**

(73) Proprietor: **TOYOTA JIDOSHA KABUSHIKI
KAISHA
Toyota-shi, Aichi-ken 471-8571 (JP)**

(72) Inventors:
• **MASE, Yusuke**
  **Toyota-shi, Aichi-ken, 471-8571 (JP)**
• **FUJINAMI, Takashi**
  **Toyota-shi, Aichi-ken, 471-8571 (JP)**
• **HATTORI, Takayuki**
  **Toyota-shi, Aichi-ken, 471-8571 (JP)**

(74) Representative: **Cabinet Beau de Loménie
103, rue de Grenelle
75340 Paris Cedex 07 (FR)**

(56) References cited:
DE-T5- 112015 004 817     JP-A- 2007 245 814
US-A1- 2004 085 197       US-A1- 2009 085 340
US-A1- 2018 257 646       US-A1- 2018 354 519

**Description**

BACKGROUND

Technical Field

The present disclosure relates to a force limiter control system.

Related Art

Japanese Patent Application Laid-Open (JP-A) No. 2018-131168 discloses a structure including a variable force limiter mechanism that can change a load (force limiter load) applied to a seat belt at a time of vehicle collision. In JP-A No. 2018-131168, the severity of a collision is predicted based on a detection result from a relative speed sensor, and the force limiter load is changed based on the severity of the collision and the detected load at the time of the collision. US Patent Application Publication US 2009/0085340 A1 discloses a method and a system for controlling an adaptive belt force limiter for a vehicle safety belt in a vehicle provided with at least one closing velocity sensor for detecting objects in front of the vehicle, capable of sensing the presence of an object in at least two different spatial areas and generating area specific signals.

Incidentally, in a collision safety system that detects an obstacle ahead using a sensor, a preceding vehicle cannot be detected when the distance to the preceding vehicle is small. For this reason, even if the host vehicle moves in a lateral direction (that is, the vehicle width direction) as a result of steering or the like and collides with another vehicle, the force limiter load of the variable force limiter mechanism is not changed.

SUMMARY

In the present disclosure, a force limiter control system is obtained that is capable of improving collision safety performance in a configuration including a variable force limiter mechanism.

A force limiter control system according to a first aspect of the present disclosure includes: a variable force limiter unit configured to change a force limiter load applied to a seatbelt at a time of vehicle collision; a relative speed detection unit that detects a relative speed between a host vehicle and a preceding vehicle; a force limiter load changing unit that sets a lower load as the force limiter load of the variable force limiter unit in a case in which the relative speed detected by the relative speed detection unit is lower than a predetermined threshold value, than in a case in which the relative speed is equal to or greater than the predetermined threshold value; and a low load invalidation unit that invalidates a change to the force limiter load by the force limiter load changing unit in a case in which a collision with a collision object other than the preceding vehicle has been predicted in a region in which the preceding vehicle cannot be detected because an inter-vehicular distance to the preceding vehicle is smaller than a predetermined distance, is smaller than an estimated lateral movement amount in the vehicle width direction of the host vehicle after entry into the region.

The force limiter control system according to the first aspect of the present disclosure is configured such that the force limiter load applied to a seatbelt at a time of a vehicle collision by the variable force limiter unit may be changed. In addition, a relative speed detector that detects the relative speed between the host vehicle and the preceding vehicle is provided. When the relative speed detected by the relative speed detection unit is smaller than a predetermined threshold, the force limiter load changing unit sets the force limiter load of the variable force limiter unit at a low load. Thereby, a situation in which, when a low collision load is input to an occupant, there is unnecessary restraint by a seatbelt, may be avoided. That is, the load on the occupant is reduced by changing the force limiter load according to the severity of the collision.

In addition, when a collision with a collision object other than the preceding vehicle is predicted in a region in which the preceding vehicle cannot be detected because the distance between the host vehicle and the preceding vehicle is smaller than a predetermined distance, the change to the force limiter load by the limiter load changing unit is invalidated by the low load invalidation unit. Thereby, for example, even when the host vehicle avoids the preceding vehicle and collides with a large vehicle, the force limiter load is not changed to a low load, owing to the invalidation of the change to the force limiter load, and the occupant is favorably restrained. Here, the "preceding vehicle" refers to a vehicle traveling in front of the host vehicle in a state before the host vehicle enters the region.

The low load invalidation unit invalidates the change to the force limiter load by the force limiter load changing unit in a case in which an overlap amount, in a vehicle width direction between the host vehicle and the preceding vehicle at a time of entry into the region, is smaller than an estimated lateral movement amount in the vehicle width direction of the host vehicle after entry into the region.

In the force limiter control system according to the first aspect of the present disclosure, when the overlap amount in the vehicle width direction between the host vehicle and the preceding vehicle is smaller than the estimated lateral movement amount in the vehicle width direction of the host vehicle, the possibility of the host vehicle avoiding the preceding vehicle is increased. Therefore, in this case, by invalidating the change to the force limiter load, the occupant is favorably restrained.

The force limiter control system according to a second aspect of the present disclosure is that of the first aspect, in which the estimated lateral movement amount is calculated based on the relative speed between the host vehicle and the preceding vehicle, and an angle of the host vehicle relative to a direction of travel, at the time of entry into the region, and based on a maximum lateral relative acceleration due to driver operation.

In the force limiter control system according to the second aspect of the present disclosure, in addition to the relative speed between the host vehicle and the preceding vehicle and the angle of the host vehicle with respect to the direction of travel, the estimated lateral movement amount is calculated in view of the maximum lateral relative acceleration due to driver operation. Thus, it is accurately determined whether or not the host vehicle may avoid the preceding vehicle.

The force limiter control system according to a third aspect of the present disclosure is that of the second aspect, in which a prevention sensor including at least one of an optical camera, a millimeter wave radar or a laser radar is provided at a front part of the host vehicle; and the overlap amount between the host vehicle and the preceding vehicle is detected by the prevention sensor.

In the force limiter control system according to the third aspect of the present disclosure, the prevention sensor includes at least one of an optical camera, a millimeter wave radar, or a laser radar. The prevention sensor detects the overlap amount between the host vehicle and the preceding vehicle. For this reason, the overlap amount is detected without separately providing a dedicated sensor.

The force limiter control system according to the fourth aspect of the present disclosure is that of any one of the first to the third aspects, further including an initialization unit that overrides invalidation, by the low load invalidation unit, of the change to the force limiter load in a case in which a collision is not detected after a predetermined time has elapsed since entry of the host vehicle into the region.

In the force limiter control system according to the fourth aspect of the present disclosure, the change to the force limiter load is made effective by overriding the invalidation of the change to the force limiter load. Thereby, when a collision of the host vehicle is avoided, the variable force limiter unit may be allowed to function.

The force limiter control system according to a fifth aspect of the present disclosure is that of the first aspect, further including a large vehicle detection unit that detects a large vehicle, which is larger than the preceding vehicle, traveling in a periphery of the preceding vehicle, wherein the low load invalidation unit invalidates the change to the force limiter load by the force limiter load changing unit in a case in which it is detected by the large vehicle detection unit that a large vehicle is traveling in the periphery of the preceding vehicle.

In the force limiter control system according to the fifth aspect of the present disclosure, when the large vehicle detection unit detects that a large vehicle is traveling in the periphery of the preceding vehicle, a collision with a collision object other than the preceding vehicle is predicted, and the change to the force limiter load by the force limiter load changing unit is invalidated. As a result, even if the host vehicle collides with a large vehicle after avoiding a collision with the preceding vehicle, the force limiter load is not changed to a low load, and therefore, the occupant is favorably restrained.

The force limiter control system according to a sixth aspect of the present disclosure is that of the first aspect, further including a traffic lane detection unit that detects a traffic lane boundary line, wherein the low load invalidation unit invalidates the change to the force limiter load by the force limiter load changing unit in a case in which it is detected by the traffic lane detection unit that the host vehicle has deviated from a traffic lane in the region.

In the force limiter control system according to the sixth aspect of the present disclosure, when the traffic lane detection unit detects that the host vehicle has deviated from a traffic lane, a collision with a collision object other than the preceding vehicle is predicted, and the change to the force limiter load by the force limiter load changing unit is invalidated. Thereby, for example, even when the host vehicle enters an adjacent lane and collides with another vehicle, the force limiter load is not changed to a low load, and therefore, the occupant is favorably restrained.

The force limiter control system according to an seventh aspect of the present disclosure is that of the first aspect, further including a steering angle detection unit that detects a steering angle, wherein the low load invalidation unit invalidates the change to the force limiter load by the force limiter load changing unit in a case in which it is detected by the steering angle detection unit that the steering angle is larger than a predetermined threshold value.

In the force limiter control system according to the seventh aspect of the present disclosure, when the steering angle detected by the steering angle detection unit is larger than a predetermined threshold value, a collision with a collision object other than the preceding vehicle is predicted, and the change to the force limiter load by the force limiter load changing unit is invalidated. As a result, even if the host vehicle collides with another vehicle or an obstacle different from the preceding vehicle, the force limiter load is not changed to a low load, and therefore, the occupant is favorably restrained.

According to the force limiter control system according to the present disclosure, it is possible to improve the collision safety performance in a configuration including a variable force limiter mechanism.

BRIEF DESCRIPTION OF THE DRAWINGS

Exemplary embodiments will be described in detail based on the following figures, wherein:

FIG. 1 is a plan view schematically illustrating a vehicle in which a force limiter control system according to an embodiment is installed, and a preceding vehicle, and illustrates a state before the host vehicle enters a region in which the preceding vehicle cannot be detected;
FIG. 2 is a plan view illustrating a state when the host vehicle enters the region from the state of FIG. 1;
FIG. 3 is a block diagram illustrating a hardware configuration of the force limiter control system according to the embodiment;
FIG. 4 is a block diagram illustrating a hardware configuration of an ECU configuring the force limiter control system according to the embodiment;
FIG. 5 is a block diagram illustrating an example of a functional configuration of the force limiter control system according to the embodiment;
FIG. 6 is a part of a flowchart illustrating a flow of force limiter control processing in the embodiment;
FIG. 7 is a part of a flowchart illustrating a flow of force limiter control processing in the embodiment;
FIG. 8 is a block diagram illustrating an example of a functional configuration of the force limiter control system according to a first variant example;
FIG. 9 is a part of a flowchart illustrating a flow of force limiter control processing in the first variant example;
FIG. 10 is a part of a flowchart illustrating a flow of force limiter control processing in the first variant example;
FIG. 11 is a block diagram illustrating an example of a functional configuration of the force limiter control system according to a second variant example;
FIG. 12 is a part of a flowchart illustrating a flow of force limiter control processing in the second variant example;
FIG. 13 is a block diagram illustrating an example of a functional configuration of the force limiter control system according to a third variant example; and
FIG. 14 is a part of a flowchart illustrating a flow of force limiter control processing in the third variant example.

DETAILED DESCRIPTION

Hereinafter, a force limiter control system 10 according to an embodiment will be described with reference to the drawings. Hereinafter, when description is given using front-rear, left-right and vertical directions, these refer to the front-rear of the vehicle front-rear direction, the left and the right of the vehicle width direction and the vertical of the vehicle vertical direction, unless otherwise specified.

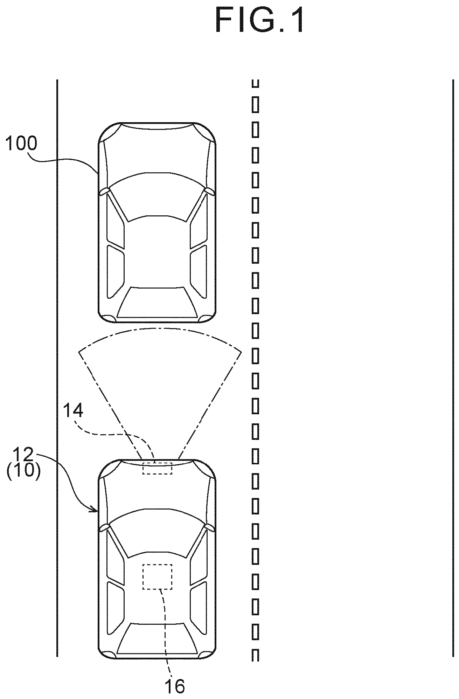

As illustrated in FIG. 1, a prevention sensor 14 is provided at the front of a vehicle 12 to which the force limiter control system 10 according to the present embodiment is applied (hereinafter, sometimes referred to as "host vehicle 12" as appropriate). The prevention sensor 14 includes at least one of an optical camera, a millimeter wave radar, or a laser radar. The prevention sensor 14 may detect, for example, a preceding vehicle 100 traveling in front of the host vehicle 12. The prevention sensor 14 is electrically connected to an electronic control unit (ECU) 16, which is a control unit installed in the host vehicle 12.

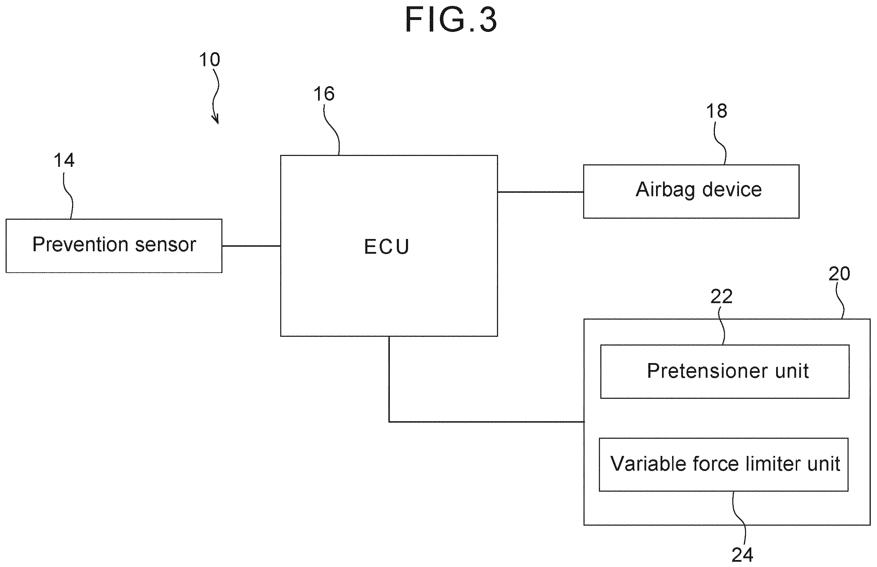

FIG. 3 is a block diagram illustrating a hardware configuration of the force limiter control system 10. As illustrated in FIG. 3, the ECU 16 is electrically connected to the prevention sensor 14, an airbag device 18, and a seat belt device 20.

The airbag device 18 is a device that inflates and deploys to restrain an occupant when the host vehicle 12 experiences a collision or a collision is predicted. For example, the airbag device 18 includes an airbag bag body that is folded and stored in a center pad of a steering wheel, and an inflator. Then, when the host vehicle 12 experiences a collision or a collision is predicted, the inflator is operated based on a signal from the ECU 16 to generate gas, and gas is supplied to the airbag bag body, such that the airbag bag body is inflated and deployed toward the vehicle rear side. The airbag device 18 may include, for example, in addition to the driver seat airbag device described above, a passenger seat airbag device that restrains an occupant in a passenger seat, or a side airbag device that is inflated and deployed at the side of a vehicle seat. Moreover, a curtain airbag device that inflates and deploys along a side door may be included, for example.

The seat belt device 20 is a device that restrains an occupant by a belt-like seat belt (that is, a webbing), and mainly includes a pretensioner unit 22 and a variable force limiter unit 24. The pretensioner unit 22 is operated based on a signal from the ECU 16 at a time of vehicle collision, and forcibly takes up the seat belt that restrains the occupant, thereby applying tension to the seat belt.

The variable force limiter unit 24 is configured to be able to change the force limiter load applied to the seat belt when the host vehicle 12 collides. In the present embodiment, as an example, the variable force limiter unit 24 may be changed between two modes: a high load mode and a low load mode. As a specific configuration of the variable force limiter, the well-known configurations described in JP-A Nos. 2018-39336 and 2018-131168 may be applied.

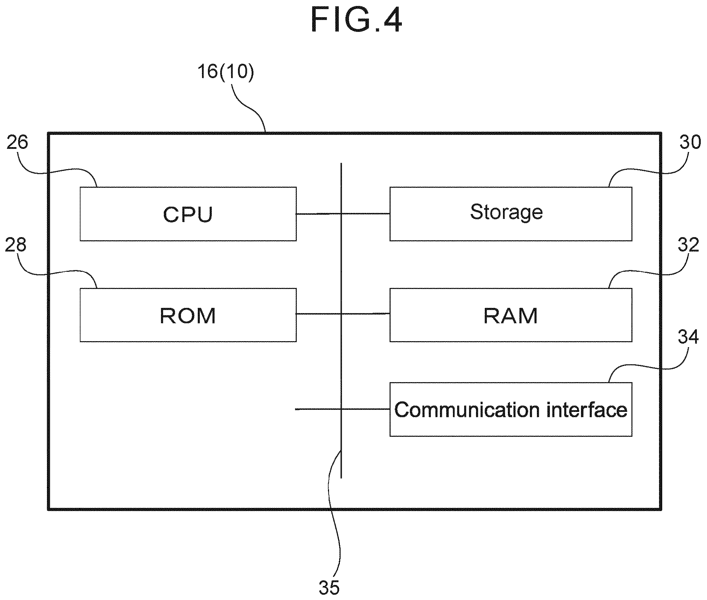

FIG. 4 is a block diagram illustrating a hardware configuration of the ECU 16 configuring the force limiter control system 10. As illustrated in Fig. 4, the ECU 16 includes a central processing unit (CPU: processor) 26, a read-only memory (ROM) 28, a random access memory (RAM) 32, a storage 30 and a communication interface 34. These respective components are connected via a bus 35 so as to be able to communicate with one another.

The CPU 26 is a central computation processing unit that executes various programs and controls the respective units. Namely, the CPU 26 reads a program from the ROM 28 or the storage 30, and executes the program using the RAM 32 as a work space. The CPU 26 controls the various components and performs a variety of computation processing according to the program recorded in the ROM 28 or the storage 30.

The ROM 28 stores various programs and various data. The RAM 32 temporarily stores programs or data as a work space. The storage 30 is configured by a Hard Disk Drive (HDD) or a Solid State Drive (SSD), and stores various data and various programs including an operating system.

The communication interface 34 is an interface for the ECU 16 to communicate with the prevention sensor 14, the airbag device 18, the seat belt device 20 and other devices, and utilizes standards such as the Ethernet®, FDDI, and Wi-Fi®.

The force limiter control system 10 of this embodiment implements various functions using the hardware resources illustrated in FIGS. 3 and 4. Functions realized by the force limiter control system 10 will be described.

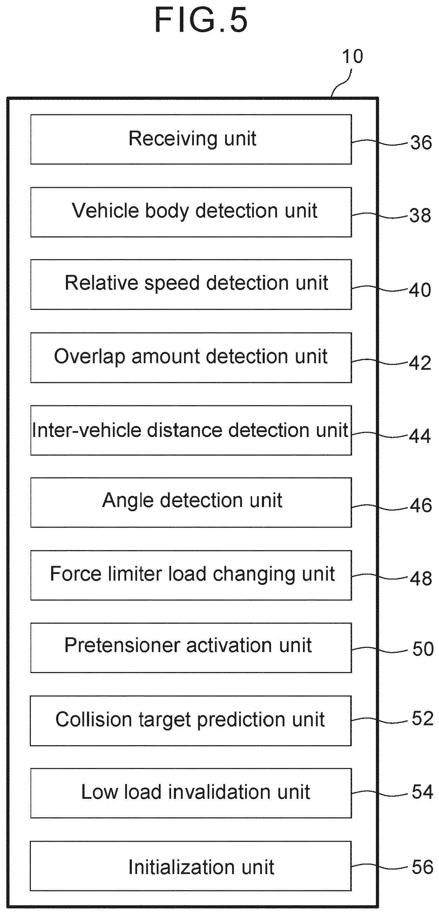

FIG. 5 is a block diagram illustrating an example of a functional configuration of the force limiter control system 10.

As illustrated in FIG. 5, the force limiter control system 10 includes, as functional configuration, a receiving unit 36, a vehicle body detection unit 38, a relative speed detection unit 40, an overlap amount detection unit 42, an inter-vehicle distance detection unit 44, an angle detection unit 46, a force limiter load changing unit 48, a pretensioner activation unit 50, a collision target prediction unit 52, a low load invalidation unit 54, and an initialization unit 56. These respective functional configurations are realized by the CPU 26 reading and executing programs that are recorded in the ROM 28 or the storage 30.

The receiving unit 36 receives information from sensors such as the prevention sensor 14 and information from other devices via the communication interface 34.

The vehicle body detection unit 38 detects the preceding vehicle 100 (see FIG. 1) based on the information from the prevention sensor 14 received by the receiving unit 36. In the present embodiment, the size of the preceding vehicle 100 is also detected, and it is determined whether the preceding vehicle 100 is a normal vehicle or a large vehicle.

The relative speed detection unit 40 detects the relative speed between the host vehicle 12 and the preceding vehicle 100 based on information from the prevention sensor 14 received by the receiving unit 36 and information from a vehicle speed sensor (not illustrated) provided at the host vehicle 12.

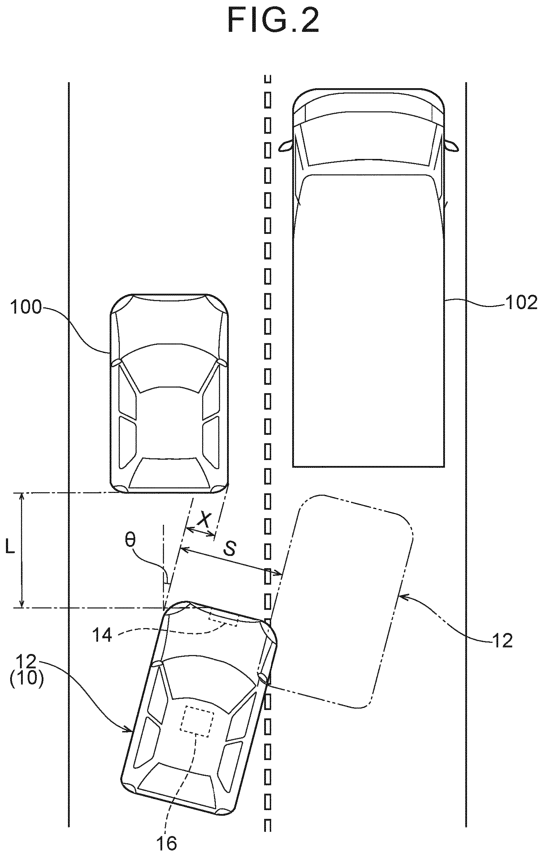

The overlap amount detection unit 42 detects an overlap amount between the host vehicle 12 and the preceding vehicle 100 based on the information from the prevention sensor 14 received by the receiving unit 36. As illustrated in FIG. 2, in the present embodiment, the distance between a reference line extending from the left side end portion of the host vehicle 12 to the preceding vehicle 100 along the traveling direction of the host vehicle 12, and parallel to this line, a reference line passing a right side end portion of the preceding vehicle, is defined as the overlap amount X. Here, the "traveling direction" refers to a direction along an imaginary line passing through the center in the vehicle width direction at the front end, and the center in the vehicle width direction at the rear end, of the host vehicle 12.

The inter-vehicle distance detection unit 44 illustrated in FIG. 5 detects the inter-vehicle distance between the host vehicle 12 and the preceding vehicle 100 based on the information from the prevention sensor 14 received by the receiving unit 36. As illustrated in FIG. 2, in this embodiment, the distance along the traveling direction of the preceding vehicle 100 from the front end of the host vehicle 12 to the rear end of the preceding vehicle 100 is defined as an inter-vehicle distance L.

The angle detection unit 46 illustrated in FIG. 5 detects the angle between the host vehicle 12 and the preceding vehicle 100 based on the information from the prevention sensor 14 received by the receiving unit 36. As illustrated in FIG. 2, in the present embodiment, the angle θ between the traveling direction of the host vehicle 12 and the traveling direction of the preceding vehicle 100 is detected by the angle detection unit 46.

The force limiter load changing unit 48 changes the force limiter load of the variable force limiter unit 24 when the relative speed between the host vehicle 12 and the preceding vehicle 100 detected by the relative speed detection unit 40 is smaller than a predetermined threshold value. Specifically, the force limiter load changing unit 48 is configured such that when the relative speed between the host vehicle 12 and the preceding vehicle 100 is smaller than a predetermined threshold value, the variable force limiter unit 24 is set to a lower load than when the relative speed is equal to or higher than the threshold value. The threshold value for changing the force limiter load is set in advance.

The pretensioner activation unit 50 operates the pretensioner unit 22 based on a signal from the ECU 16 at a time of collision of the host vehicle 12. By actuating the pretensioner unit 22, a spool (not illustrated), around which the seat belt is wound, is forcibly rotated and the seat belt is taken up. Thereby, tension is applied to the seat belt. A collision of the host vehicle 12 is detected using an acceleration sensor (not illustrated).

The collision target prediction unit 52 predicts a collision with a collision object that is different from the preceding vehicle 100. Here, a collision target is predicted in a region in which the preceding vehicle 100 cannot be detected because the inter-vehicle distance between the host vehicle 12 and the preceding vehicle 100 is shorter than a predetermined distance.

The low load invalidation unit 54 invalidates the change of the force limiter load by the force limiter load changing unit 48 when the collision target prediction unit 52 predicts a collision with a collision object that is different from the preceding vehicle. In the present embodiment, the low load invalidation unit 54 determines whether or not to invalidate the change of the force limiter load in accordance with force limiter control processing described below.

The initialization unit 56 overrides the invalidation of the change of the force limiter load by the low load invalidation unit 54 when a collision is not detected even after a predetermined time has elapsed since the host vehicle 12 entered the undetectable region.

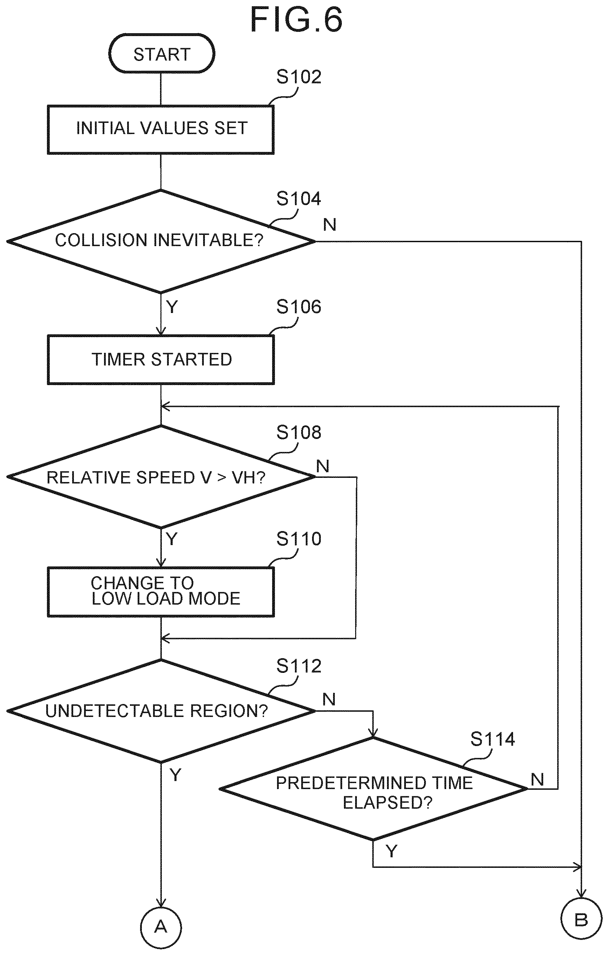

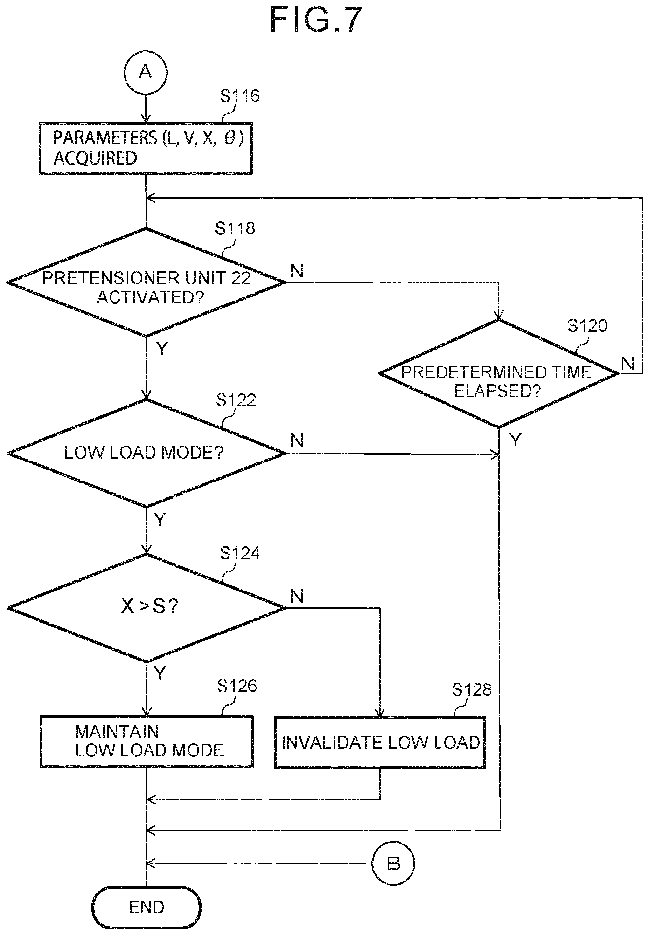

FIGS. 6 and 7 are flowcharts illustrating the flow of the force limiter control processing by the force limiter control system 10. The CPU 26 reads a program from the ROM 28 or the storage 30, deploys the program in the RAM 32, and executes the program, whereby force limiter control processing is performed.

As illustrated in FIGS. 6 and 7, the CPU 26 sets an initial value in step S102. In the present embodiment, the variable force limiter unit 24 is set to the high load mode. In addition, the change in the force limiter load due to the force limiter load changing unit 48 is set to an effective state.

The CPU 26 determines whether or not a collision is inevitable in step S104. In the present embodiment, when it is predicted that the host vehicle 12 will collide with the preceding vehicle 100 based on the signal from the prevention sensor 14, it is determined that the collision is inevitable, and the processing proceeds to step S106. However, if it is not determined in step S104 that a collision is inevitable, since the host vehicle 12 will not collide, the force limiter control processing is terminated.

The CPU 26 starts a timer in step S106. That is, the time from the beginning of a state in which the collision becomes inevitable is counted.

In step S108, the CPU 26 determines whether or not the relative speed V between the host vehicle 12 and the preceding vehicle 100 is smaller than a predetermined threshold value VH. When the relative speed V is smaller than the threshold value VH, the processing proceeds to step S110 and the mode is changed to the low load mode. That is, when the relative speed V is smaller than the threshold value VH, since the severity of the collision will be low, the seat belt is prevented from being imparted with more tension than necessary by setting the low load mode in accordance with the function of the force limiter load changing unit 48.

However, when the relative speed V is larger than the threshold value VH in step S108 (that is, in the case of "N"), the processing proceeds to step S112 without passing through step S110. That is, the force limiter load is not changed by the force limiter load changing unit 48, and the high load mode that is the initial setting value is maintained.

The CPU 26 determines whether or not there is a region in which the preceding vehicle 100 cannot be detected in step S112. Specifically, it is determined whether or not the inter-vehicle distance L detected by the inter-vehicle distance detection unit 44 is shorter than a predetermined distance. The predetermined distance is calculated from the distance at which detection by the prevention sensor 14 becomes impossible and from a communication delay time.

If the CPU 26 determines that there is a region in which the preceding vehicle 100 cannot be detected in step S112, the process proceeds to step S116. However, if it is not determined in step S112 that there is a region in which the preceding vehicle 100 cannot be detected, the processing proceeds to step S114.

In step S114, the CPU 26 determines whether or not a predetermined length of time has elapsed. Specifically, when a predetermined time has elapsed since the start of the timer in step S106, the CPU 26 determines that the collision of the host vehicle 12 has been avoided and ends the force limiter control processing. However, if the predetermined time has not elapsed since the timer was started in step S106, the CPU 26 returns to the processing of step S108 to determine whether or not the speed V is smaller than the threshold value VH.

If the CPU 26 determines that there is a region in which the preceding vehicle 100 cannot be detected in step S112, the processing proceeds to step S116 of FIG. 7, and the inter-vehicle distance L, relative speed V, overlap amount X and angle θ are acquired. These parameters are acquired, for example, by a signal from the prevention sensor 14 when the host vehicle 12 enters the region in which the preceding vehicle 100 cannot be detected. The acquired parameters are temporarily stored in the RAM 32 or the storage 30.

The CPU 26 determines whether or not the pretensioner unit 22 has been activated in step S118. In the present embodiment, the pretensioner unit 22 is activated when it is determined that the host vehicle 12 has collided based on a signal from an acceleration sensor or the like.

If the CPU 26 determines in step S118 that the pretensioner unit 22 has been activated, the processing proceeds to step S122. However, if the CPU 26 determines in step S118 that the pretensioner unit 22 has not been activated, the processing proceeds to step S120 and the CPU 26 determines whether or not a predetermined time has elapsed since the timer was started.

Specifically, when a predetermined time has elapsed since the start of the timer in step S120, the CPU 26 determines that the collision of the host vehicle 12 has been avoided and ends the force limiter control processing by means of the function of the initialization unit 56. That is, even when the change of the force limiter load has been invalidated by the low load invalidation unit 54, the invalidation is overridden.

However, if the predetermined time has not elapsed since the timer was started in step S120, the CPU 26 returns to the processing of step S118. That is, when the pretensioner unit 22 has not been activated, the processing of step S118 and the processing of step S120 are repeated until the predetermined time has elapsed.

In step S122, the CPU 26 determines whether or not the force limiter load is set to the low load mode. If the host vehicle 12 entered the region in which the preceding vehicle 100 cannot be detected in the state changed to the low load mode in step S110, it is determined that the low load mode is set, and the processing proceeds to step S124.

However, if the CPU 26 determines in step S122 that the force limiter load is not set to the low load mode, the CPU 26 ends the force limiter control processing. In this case, the force limiter load is the high load mode initially set in step S102.

In step S124, the CPU 26 determines whether or not the overlap amount X is larger than an estimated lateral movement amount S by the function of the collision target prediction unit 52. Here, the overlap amount X is an overlap amount in the vehicle width direction between the host vehicle 12 and the preceding vehicle 100 when the vehicle enters the region in which the preceding vehicle 100 cannot be detected. Further, as illustrated in FIG. 2, the estimated lateral movement amount S is an estimated lateral movement amount in the vehicle width direction of the host vehicle 12 after entering the undetectable region. An example of a method for calculating the estimated lateral movement amount S will be described below.

The estimated lateral movement amount S is calculated based on the relative speed V between the host vehicle 12 and the preceding vehicle 100 at the time of entering the region in which the preceding vehicle 100 cannot be detected, the angle $\theta$ with respect to the traveling direction of the host vehicle 12, and a maximum lateral relative acceleration a due to driver operation.

[Expression 1]

Specifically, the estimated lateral movement amount S is calculated by the following formula (1). $V_L$ is a lateral component (that is, a component in the vehicle width direction) of the host vehicle 12 at the relative speed V. A preset numerical value is used for the maximum lateral relative acceleration a.

$$S = V_L \bullet (L/V) + (a \bullet (L/V)^{\wedge}2)/2$$

Here, the lateral component $V_L$ of the host vehicle 12 at the relative speed V, and the relative speed V, satisfy the relationship of the following formula (2).

$$[\text{Expression 2}]$$
$$V_L = V \bullet \sin \theta$$

By substituting formula (2) into formula (1), the following formula (3) is obtained.

$$[\text{Expression 3}]$$
$$S = L \bullet \sin \theta + (a \bullet (L/V)^{\wedge}2)/2$$

The CPU 26 determines whether the overlap amount X is larger than the estimated lateral movement amount S in step S124 of FIG. 7, using the estimated lateral movement amount S calculated by formula (3). When the overlap amount X is larger than the estimated lateral movement amount S, the processing proceeds to step S126. The CPU 26 ends the force limiter control processing in a state in which the low load mode is maintained in step S126.

However, when the overlap amount X is smaller than the estimated lateral movement amount S, the CPU 26 proceeds to the processing of step S128. In step S128, the CPU 26 invalidates the change of the force limiter load by the force limiter load changing unit 48, by means of the function of the low load invalidation unit 54. Then, the CPU 26 ends the force limiter control processing.

(Action)

Next, the action of the present exemplary embodiment will be described.

In the force limiter control system 10 according to the present embodiment, when the relative speed V between the host vehicle 12 and the preceding vehicle 100 is smaller than a predetermined threshold value VH, the force limiter load of the variable force limiter unit 24 is set to a low load by the force limiter load changing unit 48. Thereby, when the collision load input to an occupant is low, a situation in which an occupant is unnecessarily restrained by a seatbelt may be avoided. That is, the load on the occupant may be reduced by changing the force limiter load according to the severity of the collision.

Further, when a collision with a collision object that is different from the preceding vehicle 100 is predicted by the collision target prediction unit 52, the change of the force limiter load is invalidated by the function of the low load invalidation unit 54. Thus, for example, as illustrated in FIG. 2, even if the host vehicle 12 avoids the preceding vehicle 100 and collides with a large vehicle 102 traveling in the vicinity of the preceding vehicle 100, by invalidating the change in the force limiter load, the force limiter load is not changed to a low load, and the occupant may be favorably restrained. That is, the collision safety performance may be improved.

In particular, in the present embodiment, when the overlap amount X is smaller than the estimated lateral movement amount S of the host vehicle 12 after entering the undetectable region, the collision target prediction unit 52 predicts a collision with a collision object that is different from the preceding vehicle 100. As described above, when the possibility of the host vehicle 12 avoiding the preceding vehicle 100 is high, the change of the force limiter load is invalidated, so that the occupant may be favorably restrained in preparation for a collision.

Further, in the present embodiment, the estimated lateral movement amount S is calculated in consideration of the maximum lateral relative acceleration a due to driver operation, in addition to the relative speed V and the angle θ with respect to the traveling direction of the host vehicle 12. Thereby, it is possible to accurately determine whether or not the host vehicle 12 may avoid the preceding vehicle 100.

Furthermore, in this embodiment, the prevention sensor 14 includes at least one of an optical camera, a millimeter wave radar, or a laser radar. Since the prevention sensor 14 detects the overlap amount X between the host vehicle 12 and the preceding vehicle 100, there is no need to separately provide a sensor exclusively for this purpose.

Furthermore, in the present embodiment, when a collision is not detected even after a predetermined time has elapsed since the host vehicle 12 entered the region in which the preceding vehicle 100 cannot be detected, by enabling the change of the force limiter load, the variable force limiter unit 24 may function when a collision has been avoided.

In the present embodiment, when the overlap amount X between the host vehicle 12 and the preceding vehicle 100 is smaller than the estimated lateral movement amount S of the host vehicle 12, the change of the force limiter load is invalidated; however, the present disclosure is not limited to this. The configurations described in the following first variant example, second variant example, and third variant example may be used.

(First Variant Example)

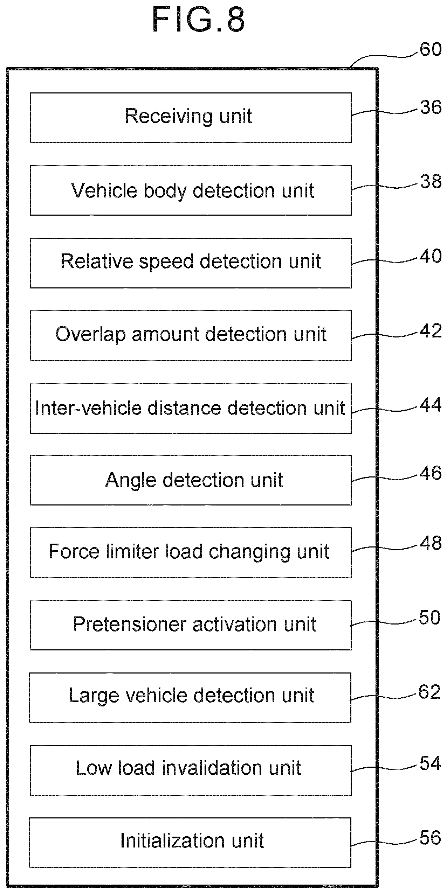

A force limiter control system 60 according to a first variant example is described with reference to FIGS. 8 to 10.

FIG. 8 is a block diagram illustrating an example of the functional configuration of the force limiter control system 60. As illustrated in FIG. 8, the force limiter control system 60 includes, as functional configuration, a receiving unit 36, a vehicle body detection unit 38, a relative speed detection unit 40, an overlap amount detection unit 42, an inter-vehicle distance detection unit 44, an angle detection unit 46, a force limiter load changing unit 48, a pretensioner activation unit 50, a low load invalidation unit 54, an initialization unit 56, and a large vehicle detection unit 62. These respective functional configurations are realized by the CPU 26 reading and executing programs that are recorded in the ROM 28 or the storage 30.

This variant example differs from the foregoing embodiment in that a large vehicle detection unit 62 is provided instead of the collision target prediction unit 52, as a functional configuration. The large vehicle detection unit 62 detects that a large vehicle larger than the preceding vehicle is traveling in the periphery of the preceding vehicle. As illustrated in FIG. 2, when a large vehicle 102 is traveling in the periphery of the preceding vehicle 100, the large vehicle detection unit 62 detects the large vehicle 102 based on a signal from the prevention sensor 14.

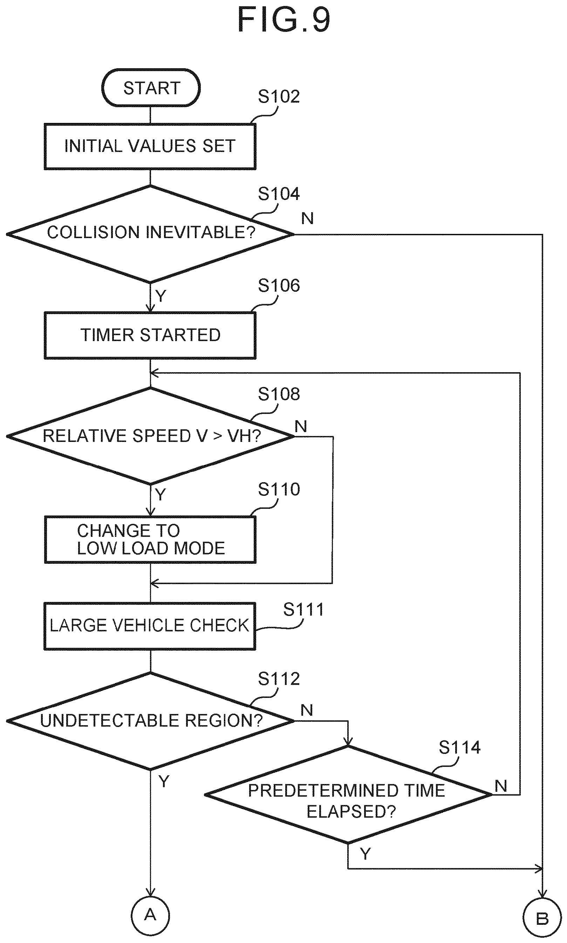

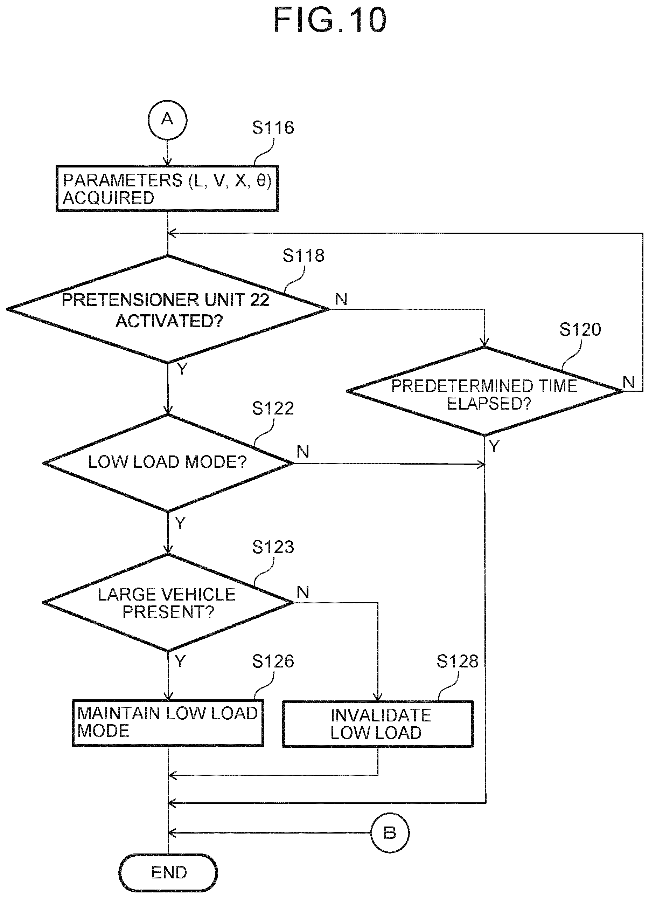

FIGS. 9 and 10 are flowcharts illustrating the flow of the force limiter control processing by the force limiter control system 60 according to the first variant example. The CPU 26 reads a program from the ROM 28 or the storage 30, deploys the program in the RAM 32, and executes the program, whereby force limiter control processing is performed. In the present variant example, step S111 is added between step S110 and step S112, as illustrated in FIG. 9. Further, as illustrated in FIG. 10, step S124 is replaced with step S123.

In step S111 of FIG. 9, the CPU 26 detects that the large vehicle 102 is traveling in the periphery of the preceding vehicle 100 by means of the function of the large vehicle detection unit 62. The presence or absence of the large vehicle 102 is temporarily stored in the RAM 32 or the storage 30.

If the CPU 26 determines that there is no region in which the preceding vehicle 100 cannot be detected in step S112 and if the predetermined time has not elapsed in step S114, the processing proceeds to step S108. Further, the processing proceeds to step S111 once more and detects that the large vehicle 102 is traveling. The information regarding the presence or absence of the large vehicle 102 stored in the RAM 32 or the storage 30 is updated.

Next, when the processing has proceeded from step S112 to step S123 in FIG. 10, the CPU 26 determines whether or not a large vehicle 102 is present. At this time, the CPU 26 reads the information stored in the RAM 32 or the storage 30 in step S111, and determines whether or not the large vehicle 102 was traveling in the periphery of the preceding vehicle 100 immediately before the host vehicle 12 entered the undetectable region.

If the CPU 26 determines in step S123 that the large vehicle 102 is traveling in the periphery of the preceding vehicle 100, the processing proceeds to step S128, and the change of the force limiter load by the force limiter load change unit 48 is invalidated by the function of the low load invalidation unit 54. Then, the CPU 26 ends the force limiter control processing. However, if the CPU 26 determines in step S123 that the large vehicle 102 is not traveling in the periphery of the preceding vehicle 100, the CPU 26 proceeds to the processing in step S126 and maintains the low load mode.

In this way, in this variant example, when the large vehicle detection unit 62 detects that the large vehicle 102 is traveling in the periphery of the preceding vehicle 100, a collision with the large vehicle 102, which is different from the preceding vehicle 100, is predicted. Therefore, the change of the force limiter load by the force limiter load changing unit 48 is invalidated by the low load invalidation unit 54.

According to this variant example, even if a collision with the preceding vehicle 100 is avoided and there is a collision with the large vehicle 102, the force limiter load is not changed to a low load, and therefore, the variable force limiter unit 24 is in the high load mode. As a result, an appropriate tension is applied to the seat belt, and the occupant may be favorably restrained.

(Second Variant Example)

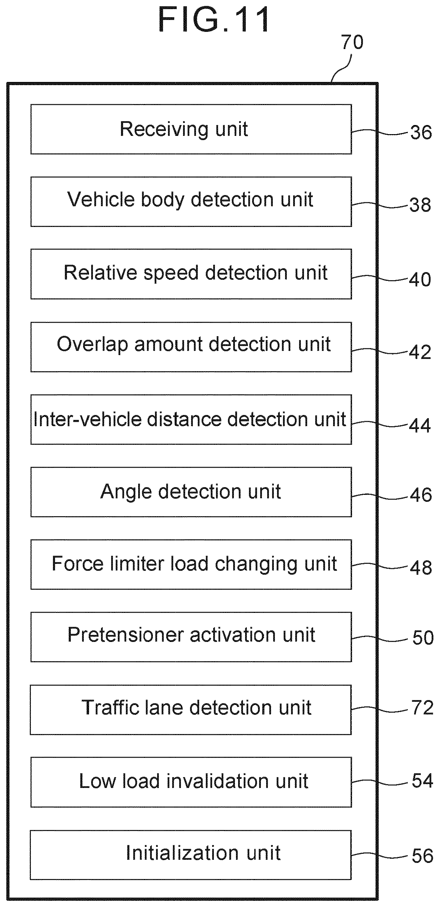

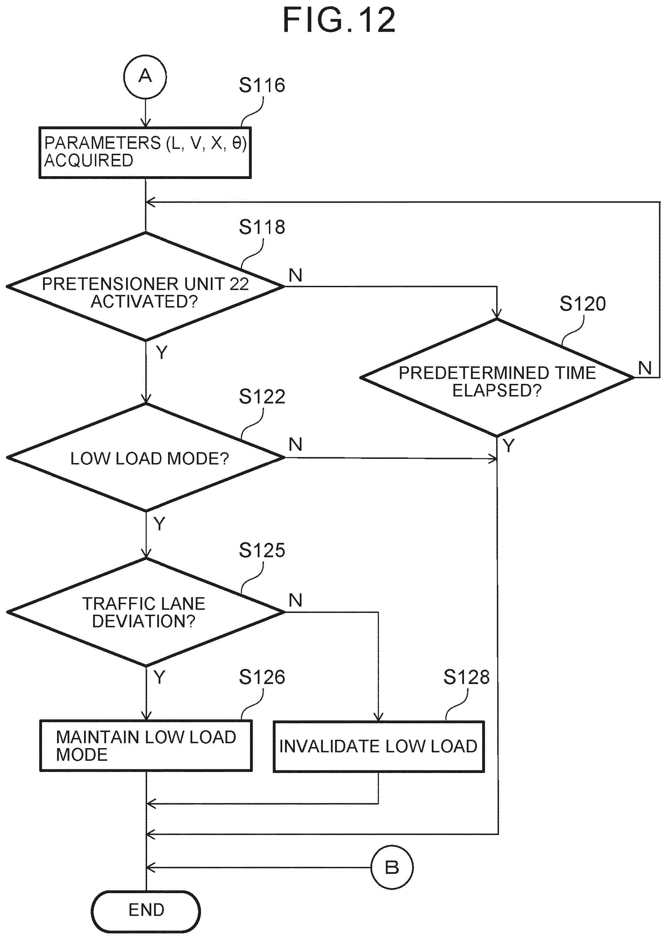

A force limiter control system 70 according to a second variant example is described with reference to FIGS. 11 and 12.

FIG. 11 is a block diagram illustrating an example of the functional configuration of the force limiter control system 70. As illustrated in FIG. 11, the force limiter control system 70 includes, as functional configuration, a receiving unit 36, a vehicle body detection unit 38, a relative speed detection unit 40, an overlap amount detection unit 42, an inter-vehicle distance detection unit 44, an angle detection unit 46, a force limiter load changing unit 48, a pretensioner activation unit 50, a low load invalidation unit 54, an initialization unit 56, and a traffic lane detection unit 72. These respective functional configurations are realized by the CPU 26 reading and executing programs that are recorded in the ROM 28 or the storage 30.

This variant example differs from the foregoing embodiment in that a traffic lane detection unit 72 is provided instead of the collision target prediction unit 52, as a functional configuration. The traffic lane detection unit 72 detects a traffic lane boundary line using a sensor such as an optical camera. During normal travel, the traffic lane detection unit 72 alerts the driver when the vehicle 12 is about to deviate from a traffic lane. In this variant example, in addition to the function of providing an alert at a time of traffic lane deviation, the change in the force limiter load is invalidated when the host vehicle 12 deviates from the traffic lane after entering the undetectable region.

FIG. 12 is a flowchart illustrating the flow of the force limiter control processing by the force limiter control system 70 according to the second variant example. The CPU 26 reads a program from the ROM 28 or the storage 30, deploys the program in the RAM 32, and executes the program, whereby force limiter control processing is performed. In the force limiter control processing in the present variant example, the processing from step S102 to step S114 is the same as in FIG. 6. For this reason, with reference to FIG. 12, the processing from step S116 is explained.

As illustrated in FIG. 12, in this variant example, step S124 of the embodiment is replaced with step S125. In step S125, the CPU 26 determines whether or not there has been deviation from a traffic lane. When the CPU 26 determines that the host vehicle 12 has deviated from a traffic lane by means of the function of the traffic lane detection unit 72, the CPU 26 proceeds to the processing of step S128 and the change of the force limiter load by the force limiter load changing unit 48 is invalidated by means of the function of the low load invalidation unit 54. Then, the CPU 26 ends the force limiter control processing. However, if the CPU 26 determines in step S125 that there has been no deviation from the traffic lane, the CPU 26 proceeds to the processing in step S126 and maintains the low load mode.

Thus, in this variant example, when the traffic lane detection unit 72 detects that the host vehicle 12 has deviated from a traffic lane, a collision with a collision object that is different from a vehicle is predicted. Therefore, the change of the force limiter load by the force limiter load changing unit 48 is invalidated by the low load invalidation unit 54.

According to this variant example, even when the host vehicle 12 deviates from a traffic lane and enters an adjacent lane, the high load mode may be maintained in preparation for a collision with a vehicle traveling in the adjacent lane. Further, since the traffic lane deviation may be detected even after the host vehicle 12 enters the undetectable region, the possibility of collision with a different vehicle from the preceding vehicle 100 may be determined with high accuracy.

(Third Variant Example)

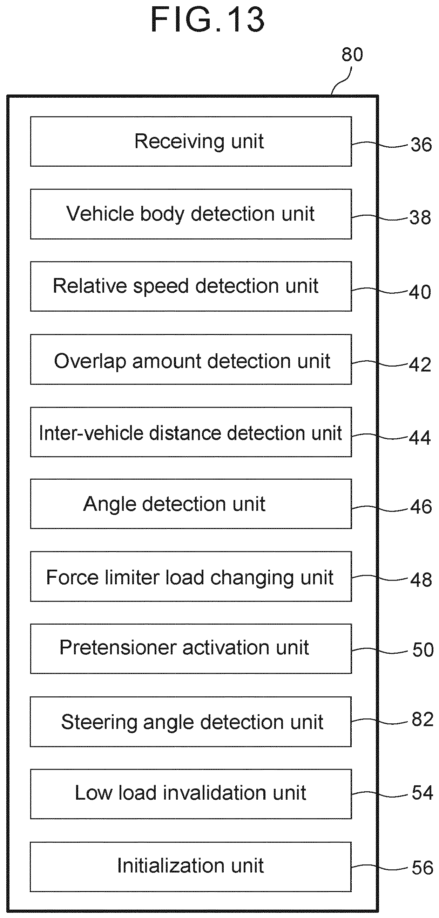

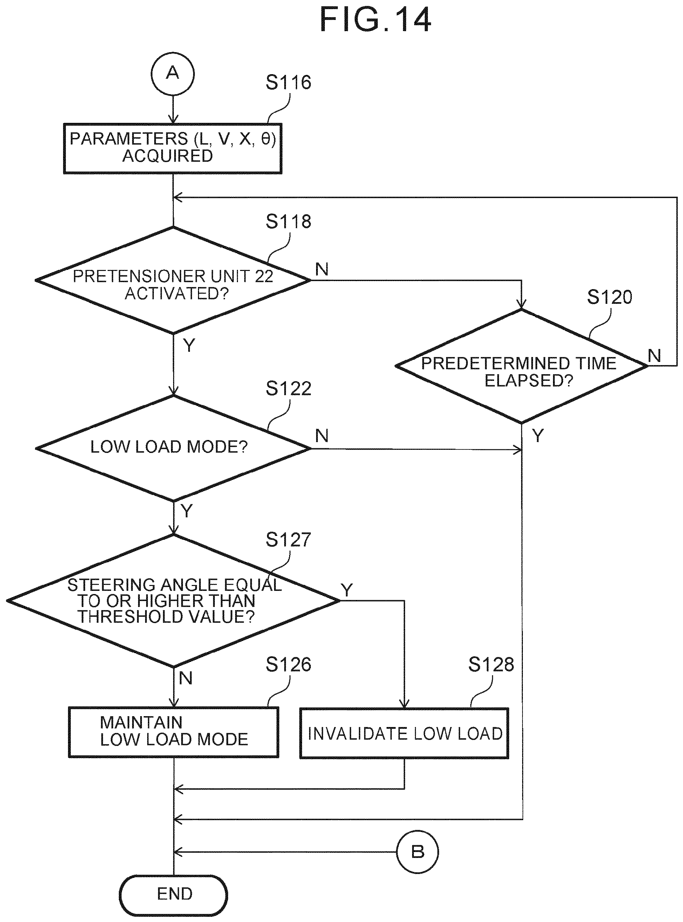

A force limiter control system 80 according to a third variant example is described with reference to FIGS. 13 and 14.

FIG. 13 is a block diagram illustrating an example of the functional configuration of the force limiter control system 80. As illustrated in FIG. 13, the force limiter control system 80 includes, as functional configuration, a receiving unit 36, a vehicle body detection unit 38, a relative speed detection unit 40, an overlap amount detection unit 42, an inter-vehicle distance detection unit 44, an angle detection unit 46, a force limiter load changing unit 48, a pretensioner activation unit 50, a low load invalidation unit 54, an initialization unit 56, and a steering angle detection unit 82. These respective functional configurations are realized by the CPU 26 reading and executing programs that are recorded in the ROM 28 or the storage 30.

This variant example differs from the foregoing embodiment in that a steering angle detection unit 82 is provided instead of the collision target prediction unit 52, as a functional configuration. The steering angle detection unit 82 detects the steering angle of the host vehicle 12. In this variant example, the change in the force limiter load is invalidated when the steering angle is equal to or greater than a predetermined threshold value after the host vehicle 12 enters the undetectable region.

FIG. 14 is a flowchart illustrating the flow of the force limiter control processing by the force limiter control system 80 according to the third variant example. The CPU 26 reads a program from the ROM 28 or the storage 30, deploys the program in the RAM 32, and executes the program, whereby force limiter control processing is performed. In the force limiter control processing in the present variant example, the processing from step S102 to step S114 is the same as in FIG. 6. For this reason, with reference to FIG. 14, the processing from step S116 is explained.

As illustrated in FIG. 14, in this variant example, step S124 of the embodiment is replaced with step S127. In step S127, the CPU 26 determines whether or not the steering angle of the host vehicle 12 is greater than a predetermined threshold value. The steering angle is detected based on information from the steering angle detection unit 82. If the CPU 26 determines in step S127 that the steering angle is equal to or greater than the threshold value, the processing proceeds to step S128, and the change of the force limiter load by the force limiter load change unit 48 is invalidated by the function of the low load invalidation unit 54. Then, the CPU 26 ends the force limiter control processing.

However, if the CPU 26 determines in step S127 that the steering angle is smaller than the threshold value, the CPU 26 proceeds to the processing of step S126 and maintains the low load mode.

Thus, in this variant example, when the steering angle detected by the steering angle detection unit 82 is larger than the predetermined threshold value, a collision with a different collision object from the preceding vehicle 100 is predicted. Therefore, the change of the force limiter load by the force limiter load changing unit 48 is invalidated by the low load invalidation unit 54.

According to this variant example, even when the host vehicle 12 collides with another vehicle or an obstacle different from the preceding vehicle 100, the high load mode may be maintained.

Although the foregoing explanation has been made regarding a force limiter control system of an exemplary embodiment and variant examples, various aspects may, of course, be implemented within a range that does not depart from the gist of the present disclosure. For example, in the above-described embodiment and variant examples, a predetermined constant threshold value is used as the threshold value for changing the force limiter load; however, the present disclosure is not limited to this.

That is, the threshold value may be changed according to conditions; for example, the threshold value may be changed according to the size of the preceding vehicle 100 traveling in front of the host vehicle 12. As illustrated in FIG. 1, the threshold value may be increased when the preceding vehicle is a large vehicle based, as a reference, on a case in which the preceding vehicle 100 traveling in front of the host vehicle 12 is a normal vehicle. In this case, by increasing the threshold value, it is possible to make it more difficult for the force limiter load to change to the low load mode.

Moreover, the first variant example, the second variant example, and the third variant example may be combined. For example, when the second variant example and the third variant example are combined, the functional configuration of the force limiter control system is a configuration including both a traffic lane detection unit and a steering angle detection unit. Further, control may be effected such that the change in the force limiter load is invalidated in at least one of a case in which traffic lane deviation is detected by the function of the traffic lane detection unit or a case in which the steering angle is detected to be equal to or greater than the threshold value by the function of the steering angle detection unit.

Furthermore, at least one of the first variant example, the second variant example, and the third variant example may be combined with respect to the force limiter control processing demonstrated in FIG. 6 and FIG. 7. For example, when the first variant example is incorporated, the processing of step S123 of FIG. 10 may be added between step S122 and step S124 of FIG. 7. In this way, the process moves to step S128 and the change in the force limiter load is invalidated in at least one of a case in which a large vehicle 102 is traveling in the periphery of the preceding vehicle 100 or a case in which the overlap amount X is smaller than the estimated lateral movement amount S.

Furthermore, in the above-described embodiment and variant examples, while the configuration is such that that the variable force limiter unit 24 may be changed between the two modes of a high load mode and a low load mode, the present disclosure is not limited to this. For example, the configuration may be such that it is possible to change between three modes, or such that it is possible to change between four or more modes.

Further, various types of processors other than a CPU may execute the respective processing that the CPU 26 executes by reading software (programs) in the above-described embodiment. Examples of such processors include programmable logic devices (PLD) with circuit configurations that are reconfigurable after manufacture, such as field-programmable gate arrays (FPGA), and dedicated electronic circuits that are processors including circuit configurations custom-designed to execute specific processing, such as application specific integrated circuits (ASIC). Moreover, each processing may be executed by one of such processors, or may be executed by a combination of two or more processors of the same type or different types (for example, plural FPGAs, or a combination of a CPU and an FPGA). More specific examples of hardware structures of such processors include electric circuits configured by combining circuit elements, such as semiconductor devices.

Further, in the above-described embodiment, an aspect has been explained in which each program is stored (installed) in advance in a computer-readable non-transitory recording medium, but the present disclosure is not limited to this, and each program may be provided in a format recorded in a non-transitory recording medium such as a compact disc read only memory (CD-ROM), a digital versatile disc read only memory (DVD-ROM), and a universal serial bus (USB) memory. Moreover, each of the programs may be provided in a format for downloading from an external device over a network.

## Claims

1. A force limiter control system (10, 60, 70, 80), comprising:

   a variable force limiter unit (24) configured to change a force limiter load applied to a seatbelt at a time of vehicle collision;
   a relative speed detection unit (40) that detects a relative speed between a host vehicle (12) and a preceding vehicle (100); and
   a force limiter load changing unit (48) that sets a lower load as the force limiter load of the variable force limiter unit (24) in a case in which the relative speed detected by the relative speed detection unit (40) is lower than a predetermined threshold value, than in a case in which the relative speed is equal to or greater than the predetermined threshold value; and

   **characterized in that** it further comprises:
   a low load invalidation unit (54) that invalidates a change to the force limiter load by the force limiter load changing unit (48) in a case in which a collision with a collision object other than the preceding vehicle (100) has been predicted in a region in which the preceding vehicle (100) cannot be detected because an inter-vehicular distance (L) to the preceding vehicle (100) is smaller than a predetermined distance, when an overlap amount, in a vehicle width direction between the host vehicle (12) and the preceding vehicle (100) at a time of entry into the region is smaller than an estimated lateral movement amount in the vehicle width direction of the host vehicle (12) after entry into the region.

2. The force limiter control system of claim 1, wherein the estimated lateral movement amount is calculated based on the relative speed between the host vehicle (12) and the preceding vehicle (100), and an angle of the host vehicle relative to a direction of travel, at the time of entry into the region, and based on a maximum lateral relative acceleration due to driver operation.

3. The force limiter control system of claim 1 or claim 2, wherein:

   a prevention sensor (14) including at least one of an optical camera, a millimeter wave radar or a laser radar is provided at a front part of the host vehicle (12); and
   the overlap amount between the host vehicle (12) and the preceding vehicle is detected by the prevention sensor (14).

4. The force limiter control system of any one of claims 1 to 3, further comprising an initialization unit (56) that overrides invalidation, by the low load invalidation unit (54), of the change to the force limiter load in a case in which a collision is not detected after a predetermined time has elapsed since entry of the host vehicle (12) into the region.

5. The force limiter control system of any of claims 1 to 4, further comprising a large vehicle detection unit (62) that detects a large vehicle (102), which is larger than the preceding vehicle (100), traveling in a periphery of the preceding vehicle, wherein the low load invalidation unit (54) invalidates the change to the force limiter load by the force limiter load changing unit (48) in a case in which it is detected by the large vehicle detection unit that a large vehicle is traveling in the periphery of the preceding vehicle.

6. The force limiter control system of any of claims 1 to 5, further comprising a traffic lane detection unit (72) that detects a traffic lane boundary line,
wherein the low load invalidation unit (54) invalidate the change to the force limiter load by the force limiter load changing unit (48) in a case in which it is detected by the traffic lane detection unit that the host vehicle has deviated from a traffic lane in the region.

7. The force limiter control system of any of claims 1 to 6, further comprising a steering angle detection unit (82) that detects a steering angle,
wherein the low load invalidation unit (54) invalidates the change to the force limiter load by the force limiter load changing unit (48) in a case in which it is detected by the steering angle detection unit that the steering angle is larger than a predetermined threshold value.

**Patentansprüche**

1. Kraftbegrenzersteuerungssystem (10, 60, 70, 80), umfassend:

eine variable Kraftbegrenzereinheit (24), die konfiguriert ist, um die Kraftbegrenzerlast, die zum Zeitpunkt eines Fahrzeugaufpralls auf einen Sicherheitsgurt ausgeübt wird, zu ändern;
eine Relativgeschwindigkeit-Erfassungseinheit (40), die eine Relativgeschwindigkeit zwischen einem Basisfahrzeug (12) und einem vorausfahrenden Fahrzeug (100) erfasst; und
eine Kraftbegrenzerlast-Änderungseinheit (48), die in einem Fall, in dem die von der Relativgeschwindigkeit-Erfassungseinheit (40) erfasste Relativgeschwindigkeit niedriger als ein vorbestimmter Schwellenwert ist, eine niedrigere Last als die Kraftbegrenzerlast der variablen Kraftbegrenzereinheit (24) einstellt als in einem Fall, in dem die Relativgeschwindigkeit gleich wie oder größer als der vorbestimmte Schwellenwert ist; und
**dadurch gekennzeichnet, dass** es ferner Folgendes umfasst:

eine Niedriglast-Ungültigkeitseinheit (54), die eine Änderung an der Kraftbegrenzerlast durch die Kraftbegrenzerlast-Änderungseinheit (48) in einem Fall ungültig macht, in dem eine Kollision mit einem anderen Kollisionsobjekt als dem vorausfahrenden Fahrzeug (100) in einem Bereich vorhergesagt wurde, in dem das vorausfahrende Fahrzeug (100) nicht erfasst werden kann, weil ein Abstand (L) zwischen den Fahrzeugen zu dem vorausfahrenden Fahrzeug (100) kleiner ist als ein vorbestimmter Abstand ist, wenn ein Überlappungsbetrag in einer Fahrzeugbreitenrichtung zwischen dem Host-Fahrzeug (12) und
dem vorausfahrenden Fahrzeug (100) zu dem Zeitpunkt eines Eintritts in den Bereich kleiner ist als ein geschätzter seitlicher Bewegungsbetrag in Richtung der Fahrzeugbreite des Host-Fahrzeugs (12) nach Eintritt in den Bereich.

2. Kraftbegrenzersteuerungssystem nach Anspruch 1, wobei der geschätzte Querbewegungsbetrag basierend auf der Relativgeschwindigkeit zwischen dem Host-Fahrzeug (12) und dem vorausfahrenden Fahrzeug (100) und einem Winkel des Host-Fahrzeugs in Bezug auf eine Fahrtrichtung zum Zeitpunkt eines Eintritts in den Bereich und basierend auf einer maximalen relativen Querbeschleunigung aufgrund einer Fahrerbetätigung berechnet wird.

3. Kraftbegrenzersteuerungssystem nach Anspruch 1 oder Anspruch 2, wobei:

ein Präventionssensor (14), der mindestens eine optischen Kamera, ein Millimeterwellenradar oder ein Laserradar an einem vorderen Teil des Host-Fahrzeugs (12) bereitgestellt ist; und
der Überlappungsbetrag zwischen dem Host-Fahrzeug (12) und dem vorausfahrenden Fahrzeug durch den Präventionssensor (14) erfasst wird.

4. Kraftbegrenzersteuerungssystem nach einem der Ansprüche 1 bis 3, ferner umfassend eine Initialisierungseinheit (56), die die Ungültigkeit, durch die Niedriglast-Ungültigkeitseinheit (54) der Änderung der Kraftbegrenzerlast in einem Fall übersteuert, in dem eine Kollision nicht erkannt wird, nachdem eine vorbestimmte Zeit seit dem Eintritt des Host-Fahrzeugs (12) in den Bereich verstrichen ist.

5. Kraftbegrenzersteuerungssystem nach einem der Ansprüche 1 bis 4, ferner umfassend eine Großfahrzeug-Erfassungseinheit (62), die ein Großfahrzeug (102) erkennt, das größer ist als das vorausfahrende Fahrzeug (100) und in einem Umkreis des vorausfahrenden Fahrzeugs fährt,
wobei die Niedriglast-Ungültigkeitseinheit (54) die Änderung der Kraftbegrenzerlast durch die Kraftbegrenzerlast-Änderungseinheit (48) in einem Fall ungültig macht, in dem durch die Großfahrzeug-Erfassungseinheit erfasst wird, dass ein Großfahrzeug in dem Umkreis des vorausfahrenden Fahrzeugs fährt.

6. Kraftbegrenzersteuerungssystem nach einem der Ansprüche 1 bis 5, ferner umfassend eine Fahrspur-Erfassungseinheit (72), die eine Fahrspur-Grenzlinie erfasst,
wobei die Niedriglast-Ungültigkeitseinheit (54) die Änderung der Kraftbegrenzerlast durch die Kraftbegrenzerlast-Änderungseinheit (48) in einem Fall ungültig macht, in dem durch die Fahrspur-Erfassungseinheit erfasst wird, dass das Host-Fahrzeug von einer Fahrspur in dem Bereich abgewichen ist.

7. Kraftbegrenzersteuerungssystem nach einem der Ansprüche 1 bis 6, ferner umfassend eine Lenkwinkel-Erfassungseinheit (82), die einen Lenkwinkel erfasst,
wobei die Niedriglast-Ungültigkeitseinheit (54) die Änderung der Kraftbegrenzerlast durch die Kraftbegrenzerlast-Änderungseinheit (48) in einem Fall ungültig macht, in dem durch die Lenkwinkel-Erfassungseinheit erfasst wird, dass der Lenkwinkel größer ist als ein vorbestimmter Schwellenwert.

**Revendications**

1. Système de commande de limiteur de force (10, 60, 70, 80), comprenant :

une unité de limiteur de force variable (24) configurée pour changer une charge de limiteur de force appliquée sur une ceinture de sécurité au moment d'une collision de véhicule ;
une unité de détection de vitesse relative (40) qui détecte une vitesse relative entre un véhicule hôte (12) et un véhicule précédent (100) ; et
une unité de changement de charge de limiteur de force (48) qui établit une charge plus faible comme charge de limiteur de force de l'unité de limiteur de force variable (24) dans un cas dans lequel la vitesse relative détectée par l'unité de détection de vitesse relative (40) est inférieure à une valeur de seuil prédéterminée, que dans un cas dans lequel la vitesse relative est égale ou supérieure à la valeur de seuil prédéterminée ; et
**caractérisé en ce qu'**il comprend en outre :
une unité d'invalidation de faible charge (54) qui invalide un changement de la charge de limiteur de force par l'unité de changement de charge de limiteur de force (48) dans un cas dans lequel une collision avec un objet de collision autre que le véhicule précédent (100) a été prédite dans une zone dans laquelle le véhicule précédent (100) ne peut pas être détecté du fait qu'une distance entre véhicules (L) jusqu'au véhicule précédent (100) est plus petite qu'une distance prédéterminée, quand une quantité de chevauchement, dans une direction de largeur de véhicule entre le véhicule hôte (12) et le véhicule précédent (100) au moment de l'entrée dans la zone est plus petite qu'une quantité de mouvement latéral estimé dans la direction de largeur de véhicule du véhicule hôte (12) après entrée dans la zone.

2. Système de commande de limiteur de force selon la revendication **1,** dans lequel la quantité de mouvement latéral estimé est calculée sur la base de la vitesse relative entre le véhicule hôte (12) et le véhicule précédent (100), et d'un angle du véhicule hôte par rapport à une direction de déplacement, au moment de l'entrée dans la zone, et sur la base d'une accélération relative latérale maximum due à une opération du conducteur.

3. Système de commande de limiteur de force selon la revendication 1 ou la revendication 2, dans lequel :

un capteur de prévention (14) comprenant au moins un d'une caméra optique, d'un radar à ondes millimétriques ou d'un radar à laser est prévu au niveau d'une partie avant du véhicule hôte (12) ; et
la quantité de chevauchement entre le véhicule hôte (12) et le véhicule précédent est détectée par le capteur de prévention (14).

4. Système de commande de limiteur de force selon l'une quelconque des revendications 1 à 3, comprenant en outre une unité d'initialisation (56) qui outrepasse l'invalidation, par l'unité d'invalidation de faible charge (54), du changement de la charge de limiteur de force dans un cas dans lequel une collision n'est pas détectée une fois qu'un temps prédéterminé s'est écoulée depuis l'entrée du véhicule hôte (12) dans la zone.

5. Système de commande de limiteur de force selon l'une quelconque des revendication 1 à 4, comprenant en outre une unité de détection de gros véhicule (62) qui détecte un gros véhicule (102), qui est plus grand que le véhicule précédent (100), qui se déplace dans une périphérie du véhicule précédent,

dans lequel l'unité d'invalidation de faible charge (54) invalide le changement de la charge de limiteur de force par l'unité de changement de charge de limiteur de force (48) dans un cas dans lequel l'unité de détection de gros véhicule détecte qu'un gros véhicule se déplace dans la périphérie du véhicule précédent.

6. Système de commande de limiteur de force selon l'une quelconque des revendications 1 à 5, comprenant en outre une unité de détection de voie de circulation (72) qui détectent une ligne de limite de voie de circulation, dans lequel l'unité d'invalidation de faible charge (54) invalide le changement de la charge de limiteur de force par l'unité de changement de charge de limiteur de force (48) dans un cas dans lequel l'unité de détection de voie de circulation détecte que le véhicule hôte s'est écarté d'une voie de circulation dans la zone.

7. Système de commande de limiteur de force selon l'une quelconque des revendications 1 à 6, comprenant en outre une unité de détection **d'angle** de braquage (82) qui détecte un angle de braquage, dans lequel l'unité d'invalidation de faible charge (54) invalide le changement de la charge de limiteur de force par l'unité de changement de charge de limiteur de force (48) dans un cas dans lequel l'unité de détection d'angle de braquage détecte que l'angle de braquage est plus grand qu'une valeur de seuil prédéterminée.

# FIG.1

# FIG.2

# FIG.3

Prevention sensor — 14

ECU — 16

Airbag device — 18

Pretensioner unit — 22

Variable force limiter unit — 24

20

10

EP 3 702 223 B1

# FIG.4

# FIG.5

10

| | |
|---|---|
| Receiving unit | 36 |
| Vehicle body detection unit | 38 |
| Relative speed detection unit | 40 |
| Overlap amount detection unit | 42 |
| Inter-vehicle distance detection unit | 44 |
| Angle detection unit | 46 |
| Force limiter load changing unit | 48 |
| Pretensioner activation unit | 50 |
| Collision target prediction unit | 52 |
| Low load invalidation unit | 54 |
| Initialization unit | 56 |

# FIG.6

START

S102

INITIAL VALUES SET

S104

COLLISION INEVITABLE?  N

Y

S106

TIMER STARTED

S108

RELATIVE SPEED V > VH?  N

Y

S110

CHANGE TO
LOW LOAD MODE

S112

UNDETECTABLE REGION?  N

Y

S114

PREDETERMINED TIME
ELAPSED?  N

Y

A

B

20

# FIG.7

(A)

S116
PARAMETERS (L, V, X, θ)
ACQUIRED

S118
PRETENSIONER UNIT 22
ACTIVATED?    N

Y

S120
PREDETERMINED TIME
ELAPSED?    N

Y

S122
LOW LOAD MODE?    N

Y

S124
X > S?    N

Y

S126
MAINTAIN
LOW LOAD MODE

S128
INVALIDATE LOW LOAD

(B)

END

21

# FIG.8

60

| Receiving unit | 36 |
| Vehicle body detection unit | 38 |
| Relative speed detection unit | 40 |
| Overlap amount detection unit | 42 |
| Inter-vehicle distance detection unit | 44 |
| Angle detection unit | 46 |
| Force limiter load changing unit | 48 |
| Pretensioner activation unit | 50 |
| Large vehicle detection unit | 62 |
| Low load invalidation unit | 54 |
| Initialization unit | 56 |

# FIG.9

```
              ( START )           S102
                  │
        ┌─────────────────────┐
        │  INITIAL VALUES SET │
        └─────────────────────┘
                  │                    S104
                  ▼                      N
            ◇ COLLISION INEVITABLE? ◇ ──────────────────┐
                  │                                      │
                  │ Y                  S106              │
                  ▼                                      │
        ┌─────────────────────┐                         │
        │   TIMER STARTED     │                         │
        └─────────────────────┘                         │
                  │ ◄──────────────────────────┐        │
                  ▼                    S108     │        │
            ◇ RELATIVE SPEED V > VH? ◇ ── N ──┐│        │
                  │                            ││        │
                  │ Y                  S110    ││        │
                  ▼                            ││        │
        ┌─────────────────────┐               ││        │
        │   CHANGE TO         │               ││        │
        │   LOW LOAD MODE     │               ││        │
        └─────────────────────┘               ││        │
                  │ ◄────────────────────────────┘      │
                  ▼                                      │
        ┌─────────────────────┐  S111                   │
        │ LARGE VEHICLE CHECK │                          │
        └─────────────────────┘                          │
                  │                    S112               │
                  ▼                      N                │
            ◇ UNDETECTABLE REGION? ◇ ────────┐           │
                  │                           │           │
                  │                           ▼  S114     │
                  │              ◇ PREDETERMINED TIME ◇ ─ N ┘
                  │                    ELAPSED?
                  │ Y                  │ Y
                  ▼                    └──────────────────┐
               ( A )                                   ( B )
```

# FIG.10

# FIG.11

70

| Receiving unit | 36 |
|---|---|
| Vehicle body detection unit | 38 |
| Relative speed detection unit | 40 |
| Overlap amount detection unit | 42 |
| Inter-vehicle distance detection unit | 44 |
| Angle detection unit | 46 |
| Force limiter load changing unit | 48 |
| Pretensioner activation unit | 50 |
| Traffic lane detection unit | 72 |
| Low load invalidation unit | 54 |
| Initialization unit | 56 |

# FIG.12

# FIG.13

80

| | |
|---|---|
| Receiving unit | 36 |
| Vehicle body detection unit | 38 |
| Relative speed detection unit | 40 |
| Overlap amount detection unit | 42 |
| Inter-vehicle distance detection unit | 44 |
| Angle detection unit | 46 |
| Force limiter load changing unit | 48 |
| Pretensioner activation unit | 50 |
| Steering angle detection unit | 82 |
| Low load invalidation unit | 54 |
| Initialization unit | 56 |

# FIG.14

(A)

S116
PARAMETERS (L, V, X, θ)
ACQUIRED

S118
PRETENSIONER UNIT 22
ACTIVATED?   N

S120
PREDETERMINED TIME
ELAPSED?   N

Y

S122
LOW LOAD MODE?   N

Y

Y

S127
STEERING ANGLE EQUAL
TO OR HIGHER THAN
THRESHOLD VALUE?   Y

N

S126
MAINTAIN
LOW LOAD MODE

S128
INVALIDATE LOW LOAD

(B)

END

28

**EP 3 702 223 B1**

**Patent documents cited in the description**

- JP 2018131168 A
- US 20090085340 A1
- JP 2018039336 A